# EUROPEAN PATENT APPLICATION

(11) **EP 4 597 479 A1**
(43) Date of publication of application: **06.08.2025**
(21) Application number: 23873283.8
(22) Date of filing: 27.09.2023
(51) Int. Cl.: G09G 3/20, G09G 3/3208, G09G 5/12, G09G 3/32, G09G 5/00

(54) **ELECTRONIC DEVICE CHANGING IMAGE TRANSMISSION BASED ON REFRESH RATE**

(30) Priority: 30.09.2022 KR 20220125365; 04.01.2023 KR 20230001471; 11.01.2023 KR 20230004350; 31.01.2023 KR 20230013290; 17.02.2023 KR 20230021665; 28.02.2023 KR 20230026723; 03.04.2023 KR 20230043725; 25.09.2023 WO PCT/KR2023/014711; 26.09.2023 WO PCT/KR2023/014940
(71) Applicant: Samsung Electronics Co., Ltd., Suwon-si, Gyeonggi-do 16677 (KR)
(72) Inventor: LEE, Jaesung, Suwon-si Gyeonggi-do 16677 (KR); KWON, Kyounghwan, Suwon-si Gyeonggi-do 16677 (KR); BAE, Jongkon, Suwon-si Gyeonggi-do 16677 (KR); KIM, Donghwy, Suwon-si Gyeonggi-do 16677 (KR); YANG, Byungduk, Suwon-si Gyeonggi-do 16677 (KR)
(74) Representative: Gulde & Partner
(86) International application number: PCT/KR2023/015155
(87) International publication number: WO 2024/072176

(57) **Abstract**

An electronic device is provided. The electronic device may include a processor. The electronic device may include a display drive circuit including a memory and a display including a display panel. The electronic device may include an interface connecting the processor and the display drive circuit. The processor may be configured to execute a first image transmission from the processor to the display drive circuit through the interface. The processor may be configured to execute a second image transmission from the processor to the display drive circuit through the interface at first timings identified from a start timing of the first image transmission, within at least a portion of a first time period providing a first maximum refresh rate higher than a reference refresh rate, on the basis of the length of a light-emitting period for displays on the display panel. The processor may be configured to execute the image transmission through the interface at second timings identified from the start timing, within a second time period providing a second maximum refresh rate lower than or equal to the reference refresh rate, on the basis of the shortest length of a time period during which the displays can be executed through the display drive circuit. The at least a portion of the first time period and at least a portion of the displays on the display panel within the second time period of the second time period can be executed using the memory. The length may be shorter than the shortest length.

## Description

### [Technical Field]

The following descriptions relate to an electronic device changing an image transmission based on a refresh rate.

### [Background Art]

An electronic device may include a display panel. For example, the electronic device may include display driver circuitry operably coupled with the display panel. For example, the display driver circuitry may display an image obtained from a processor of the electronic device on the display panel.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. The electronic device may comprise a processor. The electronic device may comprise a display including display driver circuitry including memory, and a display panel. The electronic device may comprise an interface connecting the display driver circuitry to the processor. The processor may be configured to execute, through the interface, a first image transmission from the processor to the display driver circuitry. The processor may be configured to, in at least a portion of a first time interval providing a first maximum refresh rate higher than a reference refresh rate, execute, through the interface, a second image transmission from the processor to the display driver circuitry at first timings identified from a start timing of the first image transmission based on a length of an emission period for a display on the display panel. The processor may be configured to, in a second time interval providing a second maximum refresh rate lower than or equal to the reference refresh rate, execute, through the interface, the second image transmission at second timings identified from the start timing based on a shortest length of a time interval capable of executing the display on the display panel through the display driver circuitry. At least a portion of displays on the display panel in the second time interval from among the at least a portion of the first time interval and the second time interval may be executed using the memory. The length may be shorter than the shortest length.

An electronic device is provided. The electronic device may comprise a processor. The electronic device may comprise a display including display driver circuitry including memory, and a display panel. The electronic device may comprise an interface connecting the display driver circuitry to the processor. The processor may be configured to execute, through the interface, a first image transmission from the processor to the display driver circuitry. The processor may be configured to, in at least a portion of a first time interval that at least partially disables scanning of an image from the memory for a display on the display panel, execute, through the interface, a second image transmission from the processor to the display driver circuitry at first timings identified from a start timing of the first image transmission based on a length of an emission period for the display. The processor may be configured to, in a second time interval that enables the scanning, execute, through the interface, the second image transmission at second timings identified from the start timing based on a shortest length of a time interval capable of executing the display through the display driver circuitry. The length may be shorter than the shortest length.

### [Description of the Drawings]

FIG. 1 is a simplified block diagram illustrating an exemplary electronic device.
FIG. 2 illustrates an example of an image transmission in at least a portion of a first time interval and an image transmission in a second time interval.
FIG. 3 and FIG. 4 illustrate an example of an image transmission in at least another portion of a first time interval.
FIG. 5 illustrates an example of a re-display of an image that starts after a reference time from a start timing of a display of the image while memory in display driver circuitry is being enabled.
FIG. 6 illustrates an example of a re-display of an image that starts after a reference time from a start timing of a display of the image while memory in display driver circuitry is being disabled.
FIGS. 7 and 8 illustrate an example of an image transmission in a first time interval after a change from a first maximum refresh rate to a second maximum refresh rate.
FIG. 9 illustrates an example of an operation executed in response to a loss of a control command from a processor to display driver circuitry.
FIG. 10 illustrates an example of an operation executed in response to a loss of an image from a processor to display driver circuitry.
FIG. 11 is a block diagram of an electronic device in a network environment according to various embodiments.
FIG. 12 is a block diagram of a display module according to various embodiments.

### [Mode for Invention]

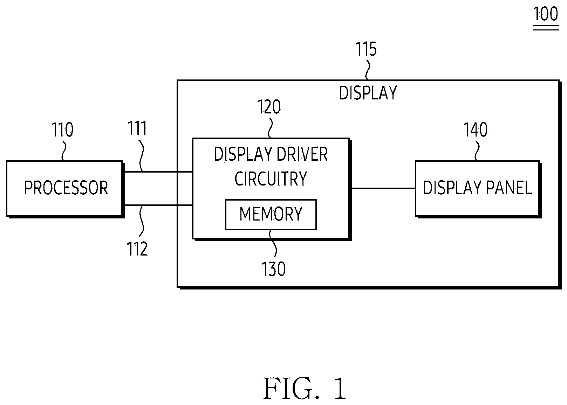

FIG. 1 is a simplified block diagram illustrating an exemplary electronic device.

Referring to FIG. 1, an electronic device 100 may include a processor 110 and a display 115.

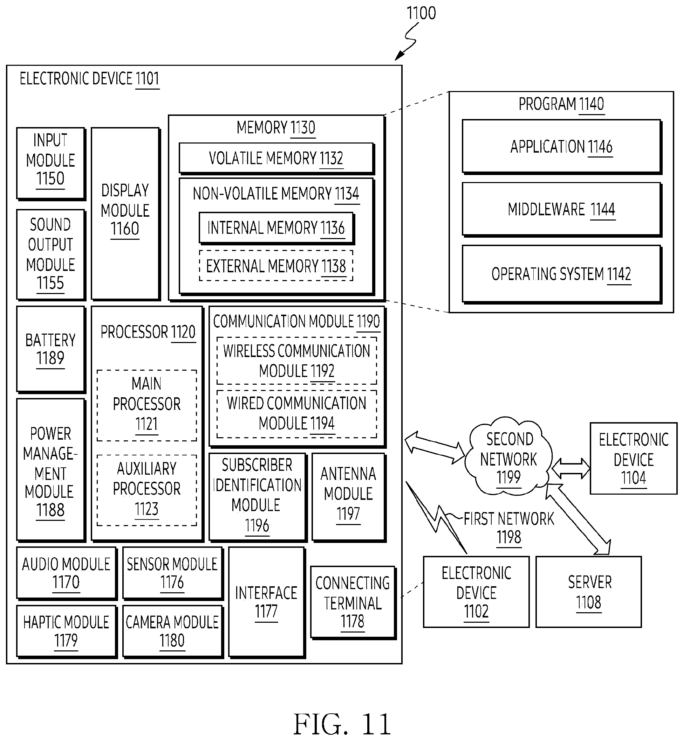

The processor 110 may include at least a portion of the processor 1120 of FIG. 11. The processor 110 may be operably coupled with display driver circuitry 120 (or the display 115). The processor 110 being operably coupled with the display driver circuitry 120 may indicate that the processor 110 is directly or indirectly connected to the display driver circuitry 120. For example, the processor 110 being operably coupled with the display driver circuitry 120 may indicate that the processor 110 is connected to the display driver circuitry 120 through a first interface 111. The first interface 111 may be used to transmit an image from the processor 110 to the display driver circuitry 120. For example, the processor 110 being operably coupled with the display driver circuitry 120 may indicate that the processor 110 is connected to the display driver circuitry 120 through a second interface 112. The second interface 112 separated from the first interface 111 may be used to provide a signal from the processor 110 to the display driver circuitry 120.

The signal may include a pulse signal.

The pulse signal may be provided from the processor 110 to the display driver circuitry 120 to synchronize at least a portion of operations of the display 115 (or operations of the display driver circuitry 120) with at least a portion of operations of the processor 110. As a non-limiting example, the pulse signal may be referred to as an external synchronization signal (Esync).

For example, a period of the pulse signal transmitted from the processor 110 to the display driver circuitry 120 may be a period of a horizontal synchronization signal for the processor 110. For example, the processor 110 may inform the display driver circuitry 120 of the period of the horizontal synchronization signal for the processor 110 through the period of the pulse signal.

For example, a waveform (or pulse width) of the pulse signal may be changed at each start timing of an emission synchronization signal for the processor 110. The emission synchronization signal may indicate an emission period for a display on the display panel 140 or may indicate a timing of an emission signal from the display driver circuitry 120 to the display panel 140. For example, the processor 110 may inform the display driver circuitry 120 of a period of the emission synchronization signal for the processor 110, based on setting the waveform (or the pulse width) of the pulse signal transmitted to the display driver circuitry 120 to a first waveform (or a first pulse width) at the start timing of the horizontal synchronization signal for the processor 110 that does not overlap with the start timing of the emission synchronization signal for the processor 110 and setting the waveform (or the pulse width) of the pulse signal transmitted to the display driver circuitry 120 to a second waveform (or a second pulse width) at the start timing of the horizontal synchronization signal for the processor 110 that overlaps with the start timing of the emission synchronization signal for the processor 110.

For example, the waveform (or the pulse width) of the pulse signal may be changed at each start timing of a vertical synchronization signal for the processor 110 or further changed. For example, the processor 110 may inform the display driver circuitry 120 of a period of the vertical synchronization signal for the processor 110, based on setting the waveform (or the pulse width) of the pulse signal transmitted to the display driver circuitry 120 to the first waveform (or the first pulse width) at the start timing of the horizontal synchronization signal for the processor 110 that does not overlap with the start timing of the vertical synchronization signal for the processor 110 and setting the waveform (or the pulse width) of the pulse signal transmitted to the display driver circuitry 120 to the second waveform (or the second pulse width) or a third waveform (or a third pulse width) at the start timing of the horizontal synchronization signal for the processor 110 that overlaps with the start timing of the vertical synchronization signal for the processor 110.

For example, the waveform (or the pulse width) of the pulse signal may be used to indicate a control command provided from the processor 110 to the display driver circuitry 120. For example, the processor 110 may indicate the control command, by transmitting, to the display driver circuitry 120, the pulse signal having another waveform (or another pulse width) distinct from the second waveform (or the second pulse width) and/or the third waveform (or the third pulse width). As a non-limiting example, the control command may be referred to as a still indication. The still indication may include a sticky flag indication and/or an on-the-fly indication.

For example, the second interface 112 may be used to provide a signal from the display driver circuitry 120 to the processor 110. For example, the signal may be provided or transmitted from the display driver circuitry 120 to the processor 110 to request an image transmission. For example, the signal may be provided from the display driver circuitry 120 to the processor 110 to indicate a loss of an image transmitted from the processor 110 to the display driver circuitry 120. According to embodiments, the signal may also be provided from the display driver circuitry 120 to the processor 110 through another interface (e.g., a third interface (not illustrated in FIG. 1)) separated from the second interface 112.

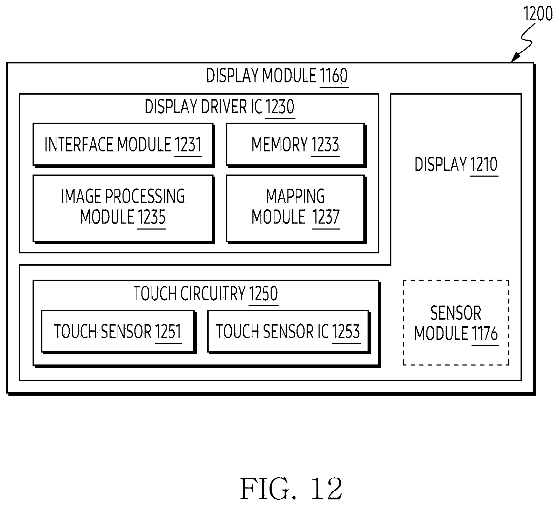

The display 115 may include at least a portion of the display module 1160 of FIGS. 11 and 12. The display 115 may include display driver circuitry 120 and a display panel 140.

The display driver circuitry 120 may include at least a portion of the DDI 1230 of FIG. 12. The display driver circuitry 120 may include memory 130. The memory 130 may include at least a portion of the memory 1233 of FIG. 12. The memory 130 may be referred to as a graphic random access memory (GRAM) or a frame buffer memory.

The display panel 140 may include at least a portion of the display 1210 of FIG. 12.

For example, the display driver circuitry 120 may utilize or enable the memory 130, in a mode of executing an image transmission from the processor 110 to the display driver circuitry 120 based on a timing identified by the processor 110 among the processor 110 and the display driver circuitry 120. As a non-limiting example, the mode may be different from a command mode of a mobile industry processor interface (MIPI) display serial interface (DSI). As a non-limiting example, the mode may include a video mode of MIPI DSI. For example, based on storing in the memory 130 an image received from the processor 110 and scanning the image in the memory 130 (or the image from the memory 130), the display driver circuitry 120 may, in the mode, display the image on the display panel 140. For example, since the display driver circuitry 120 displays the image on the display panel while storing in the memory 130 the image within the mode, displaying the image based on scanning the image in the memory 130 may be displaying again the image. As a non-limiting example, the display driver circuitry 120 may display again the image based on scanning the image in the memory 130 to reduce occurrence of an afterimage on the display panel 140 and/or occurrence of flickering on the display panel 140.

For example, displaying again the image based on scanning the image in the memory 130 may be transparent to the processor 110. For example, since the processor 110 cannot recognize whether the display driver circuitry 120 displays again the image based on scanning the image in the memory 130, the image transmission may be executed while displaying again the image based on scanning the image in the memory 130. For example, since the image transmission executed while displaying again the image based on scanning the image in the memory 130 may reduce a quality of a service provided through the display 115, the processor 110 may execute the image transmission within a second time interval, differently from the image transmission being executed within at least a portion of the first time interval. For example, since the image transmission executed while displaying again the image based on scanning the image in the memory 130 may reduce the quality of the service provided through the display 115, the processor 110 may execute the image transmission within at least another portion of the first time interval, differently from the image transmission being executed within the at least a portion of the first time interval.

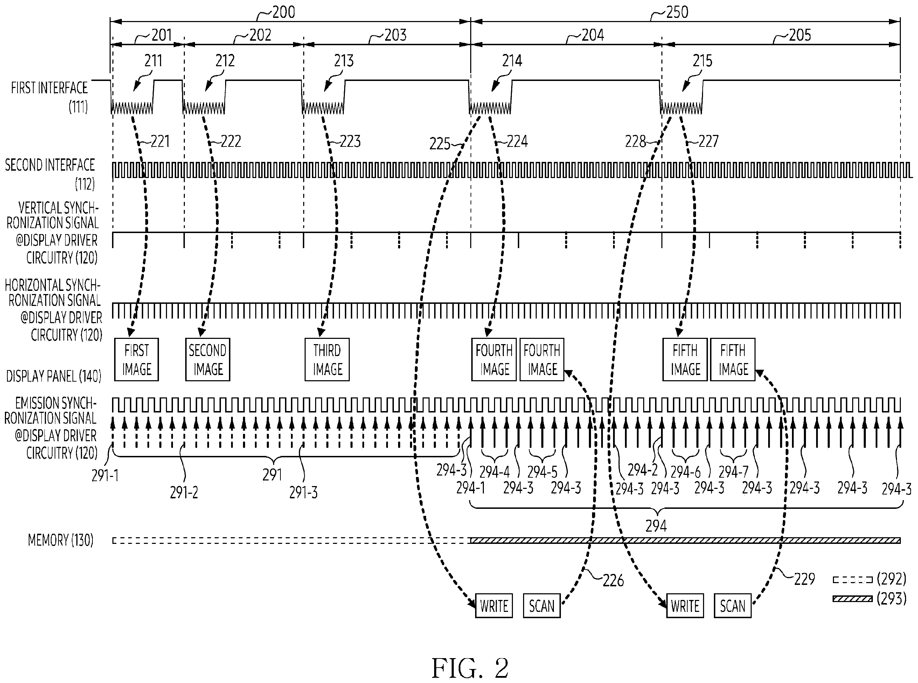

The image transmission executed within the second time interval, which is at least partially different from the image transmission executed within the at least a portion of the first time interval, may be exemplified in the description of FIG. 2.

FIG. 2 illustrates an example of an image transmission in at least a portion of a first time interval and an image transmission in a second time interval.

Referring to FIG. 2, the processor 110 may periodically transmit the pulse signal to the display driver circuitry 120 through a second interface 112. For example, since a period of the pulse signal corresponds to a period of the horizontal synchronization signal for the processor 110, a horizontal synchronization signal for the display driver circuitry 120 may be synchronized with the horizontal synchronization signal for the processor 110. Although not illustrated in FIG. 2, as exemplified in the description of FIG. 1, a vertical synchronization signal for the display driver circuitry 120 may be synchronized with the vertical synchronization signal for the processor 110, based on the pulse signal. Although not illustrated in FIG. 2, as exemplified in the description of FIG. 1, an emission synchronization signal for the display driver circuitry 120 may be synchronized with the emission synchronization signal for the processor 110. based on the pulse signal.

For example, since the emission synchronization signal for the display driver circuitry 120 is synchronized with the emission synchronization signal for the processor 110, the processor 110 may execute the image transmission based on a timing of the emission synchronization signal for the processor 110 synchronized with the emission synchronization signal for the display driver circuitry 120 within at least a portion 200 of the first time interval. For example, timings (or opportunities) of the image transmission capable of being executed by the processor 110 within the at least a portion 200 of the first time interval may be indicated as the arrow 291.

For example, the first time interval may indicate a time interval providing a first maximum refresh rate higher than a reference refresh rate. For example, the at least a portion 200 of the first time interval may include a time interval 201, a time interval 202, and a time interval 203. For example, a refresh rate corresponding to each of the time interval 201, the time interval 202, and the time interval 203 may be higher than the reference refresh rate. As a non-limiting example, when the reference refresh rate is approximately 30 hertz (Hz), the time interval 201 may correspond to a refresh rate of approximately 80 (Hz), the time interval 202 may correspond to a refresh rate of approximately 48 (Hz), and the time interval 203 may correspond to a refresh rate of approximately 34.3 (Hz).

For example, the first time interval may indicate a time interval at least partially disabling scanning of an image from the memory 130 (or the image in the memory 130) for a display on the display panel 140. For example, the memory 130 may be disabled within the at least a portion 200 of the first time interval, as indicated by a bar 292.

For example, the processor 110 may execute a first image transmission from the processor 110 to the display driver circuitry 120 through the first interface 111. For example, the processor 110 may execute a second image transmission from the processor 110 to the display driver circuitry 120 through the first interface 111, at first timings identified from a start timing of the first image transmission based on a length of an emission period (e.g., a period of the emission synchronization signal for the processor 110) for a display on the display panel 140, within the at least a portion 200 of the first time interval.

For example, the processor 110 may transmit a first image to the display driver circuitry 120 through the first interface 111, as in a state 211, based on a timing indicated by the arrow 291-1. For example, the transmission of the first image may correspond to the first image transmission.

For example, the display driver circuitry 120 may display the first image on the display panel 140 by scanning the first image, as indicated by the arrow 221.

For example, the processor 110 may transmit, to the display driver circuitry 120 through the first interface 111, a second image subsequent to the first image, as in a state 212, based on a timing indicated by the arrow 291-2. For example, the transmission of the second image may correspond to the second image transmission. For example, a length of time between the timing indicated by the arrow 291-1 and a timing indicated by the arrow 291-2 may be longer than the length of the emission period and may be a multiple of the length of the emission period.

For example, the display driver circuitry 120 may display the second image on the display panel 140 by scanning the second image, as indicated by the arrow 222. For example, a time interval 201 may be a time interval between the timing at which the transmission of the first image is executed (e.g., the timing indicated by the arrow 291-1) and the timing at which the transmission of the second image is executed (e.g., the timing indicated by the arrow 291-2). For example, the time interval 201 may be determined by the transmission of the second image executed after the transmission of the first image. For example, a length of the vertical synchronization signal for the display driver circuitry 120 may be determined according to the transmission of the first image at the timing indicated by the arrow 291-1 and the transmission of the second image at the timing indicated by the arrow 291-2. For example, the length of the vertical synchronization signal for the display driver circuitry 120 may correspond to the time interval 201.

For example, the processor 110 may transmit, to the display driver circuitry 120 through the first interface 111, a third image subsequent to the second image, as in a state 213, based on a timing indicated by the arrow 291-3. For example, the display driver circuitry 120 may display the third image on the display panel 140 by scanning the third image, as indicated by the arrow 223. For example, the time interval 202 may be a time interval between the timing at which the transmission of the second image is executed (e.g., the timing indicated by the arrow 291-2) and the timing at which the transmission of the third image is executed (e.g., the timing indicated by the arrow 291-3). For example, the time interval 202 may be determined by the transmission of the third image executed after the transmission of the second image. For example, a length of the vertical synchronization signal for the display driver circuitry 120 may be determined according to the transmission of the second image at the timing indicated by the arrow 291-2 and the transmission of the third image at the timing indicated by the arrow 291-3. For example, the length of the vertical synchronization signal for the display driver circuitry 120 may correspond to the time interval 202.

For example, the processor 110 may transmit, to the display driver circuitry 120 through the first interface 111, a fourth image subsequent to the third image, as in a state 214, based on a timing indicated by the arrow 294-1. For example, the display driver circuitry 120 may display the fourth image on the display panel 140 by scanning the fourth image, as indicated by the arrow 224. For example, the time interval 203 may be a time interval between the timing at which the transmission of the third image is executed (e.g., the timing indicated by the arrow 291-3) and the timing at which the transmission of the fourth image is executed (e.g., the timing indicated by the arrow 294-1). For example, the time interval 203 may be determined by the transmission of the fourth image executed after the transmission of the third image. For example, a length of the vertical synchronization signal for the display driver circuitry 120 may be determined according to the transmission of the third image at the timing indicated by the arrow 291-3 and the transmission of the fourth image at the timing indicated by the arrow 294-1. For example, the length of the vertical synchronization signal for the display driver circuitry 120 may correspond to the time interval 203.

As described above, within the at least a portion 200 of the first time interval, the processor 110 may execute the image transmission through the first interface 111, based on timings (e.g., the timings indicated by the arrow 291) of the emission synchronization signal (e.g., the emission synchronization signal for the processor 110 and/or the emission synchronization signal for the display driver circuitry 120).

For example, since the vertical synchronization signal for the display driver circuitry 120 is synchronized with the vertical synchronization signal for the processor 110, the processor 110 may execute the image transmission based on a start timing of the vertical synchronization signal for the display driver circuitry 120, within the second time interval 250. For example, timings (or opportunities) of the image transmission capable of being executed by the processor 110 within the second time interval 250 may be indicated as the arrows 294.

For example, when a new image transmission from the processor 110 to the display driver circuitry 120 is scheduled, since the processor 110 may identify a time length between an image transmission from the processor 110 to the display driver circuitry 120 that was executed before (or immediately before) the new image transmission and the new image transmission, the processor 110 may identify whether the new image transmission is executed within the at least a portion 200 of the first time interval or within the second time interval 250. For example, the processor 110 may identify a timing of the new image transmission as a timing for the second time interval 250, based on the time length being longer than a reference length. For example, the timing for the second time interval 250 may be identified from a start timing of the image transmission, based on a shortest length to be exemplified below. For example, the processor 110 may execute the new image transmission at the timing for the second time interval 250 among the timing for the at least a portion 200 of the first time interval and the timing for the second time interval 250, based on the time length being longer than the reference length. For example, the processor 110 may identify the timing of the new image transmission as a timing for the at least a portion 200 of the first time interval, based on the time length being shorter than or equal to the reference length. For example, the timing for the at least a portion 200 of the first time interval may be identified from a start timing of the image transmission, based on the length of the emission period.

For example, the processor 110 may transmit, to the display driver circuitry 120, a control command (e.g., a still indication) along with the new image transmission (or before the new image transmission), the control command indicating to change the first maximum refresh rate to a second maximum refresh rate lower than or equal to the reference refresh rate or indicating to execute storing of the image using the memory 130. The processor 110 may identify a time interval after the control command as the second time interval 250. For example, the processor 110 may identify that the image transmission executed at a timing indicated by the arrow 294-1 and the image transmission executed at a timing indicated by the arrow 294-2 are executed within the second time interval 250.

For example, the second time interval 250 may indicate a time interval providing a second maximum refresh rate lower than or equal to the reference refresh rate. For example, the second time interval 250 may include a time interval 204 and a time interval 205. For example, a refresh rates corresponding to each of the time interval 204 and the time interval 205 may be lower than or equal to the reference refresh rate. As a non-limiting example, when the reference refresh rate is approximately 30 (Hz), the time interval 204 may correspond to a refresh rate that is approximately 30 (Hz) and the time interval 205 may correspond to a refresh rate that is approximately 24 (Hz).

For example, the second time interval 250 may indicate a time interval enabling scanning of an image from the memory 130 (or the image in the memory 130) for a display on the display panel 140. For example, the memory 130 may be enabled within the second time interval 250, as indicated by a bar 293.

For example, the processor 110 may execute, through the first interface 111, a first image transmission from the processor 110 to the display driver circuitry 120. For example, in the second time interval 250, the processor 110 may execute a second image transmission from the processor 110 to the display driver circuitry 120 through the first interface 111, at second timings identified from a start timing of the first image transmission, based on a shortest length of a time interval capable of executing the display through the display driver circuitry 120. As a non-limiting example, the shortest length of the time interval capable of executing the display through the display driver circuitry 120 may correspond to (or be equal to) a maximum frequency (or a maximum speed) of the image transmission from the processor 110 to the display driver circuitry 120, supportable by the first interface 111. For example, the shortest length may be longer than the length of the emission period. For example, the shortest length may be longer than the length of the emission period and may be a multiple of the length of the emission period.

For example, the processor 110 may transmit, to the display driver circuitry 120 through the first interface 111, the fourth image subsequent to the third image, as in a state the 214, based on a timing indicated by the arrow 294-1. For example, the transmission of the fourth image may correspond to the first image transmission. For example, the display driver circuitry 120 may display the fourth image on the display panel 140 by scanning the fourth image, as indicated by the arrow 224. For example, the display driver circuitry 120 may store the fourth image in the memory 130, as indicated by the arrow 225. As a non-limiting example, storing the fourth image in the memory 130 may be executed for re-displaying the fourth image. As a non-limiting example, storing the fourth image in the memory 130 may be executed to reduce the occurrence of the afterimage on the display panel 140. As a non-limiting example, storing the fourth image in the memory 130 may be executed to reduce the occurrence of the flickering on the display panel 140.

For example, the display driver circuitry 120 may re-display the fourth image on the display panel 140 by scanning the fourth image stored in the memory 130, as indicated by the arrow 226. For example, re-displaying the fourth image on the display panel 140 by scanning the fourth image stored in the memory 130 may be transparent to the processor 110. For example, since the processor 110 cannot identify re-displaying of the fourth image, the processor 110 may execute the image transmission through the first interface 111 at the second timings identified from the timing (e.g., a start timing of the transmission of the fourth image) indicated by the arrow 294-1, based on the shortest length, within the second time interval 250.

For example, timings of the emission synchronization signal for the display driver circuitry 120 within the second time interval 250, which are timings indicated by the arrows 294, may include third timings (e.g., timings indicated by the arrows 294-3) overlapping with the second timings and fourth timings (e.g., timings (e.g., timings indicated by arrows 294-4, arrows 294-5, arrows 294-6, and arrows 294-7) between the timings indicated by the arrows 294-3) between the third timings. For example, the third timings may be positioned (or be present) outside a portion of the second time interval 250 for scanning each of images stored in the memory 130 to re-display each of the images received from the processor 110 through the first interface 111, and the fourth timings may be positioned (or be present) within the portion of the second time interval 250.

For example, since timings indicated by the arrow 294-4 among the fourth timings are related to the image transmission (e.g., the transmission of the fourth image) as in the state 214, the timings indicated by the arrow 294-4 among the fourth timings may be identified by the processor 110. On the other hand, since timings indicated by the arrow 294-5 among the fourth timings are related to the re-display of the fourth image, which is transparent to the processor 110, the timings indicated by the arrow 294-5 among the fourth timings may not be identified by the processor 110 for the image transmission. Since the timings indicated by the arrow 294-5 are transparent to the processor 110 or are not identified by the processor 110, the processor 110 may execute the image transmission through the first interface 111, based on the timings (e.g., the second timings) indicated by the arrow 294-3, within the second time interval 250. For example, an interval between the timings indicated by the arrow 294-3 may correspond to or be equal to the shortest length.

For example, the processor 110 may transmit, to the display driver circuitry 120 through the first interface 111, a fifth image subsequent to the fourth image, as in a state 215, based on a timing indicated by the arrow 294-2. For example, the transmission of the fifth image may correspond to the second image transmission exemplified with respect to the second time interval 250. For example, a time between the timing indicated by the arrow 294-1 and the timing indicated by the arrow 294-2 may be a multiple of the shortest length. For example, the display driver circuitry 120 may display the fifth image on the display panel 140 by scanning the fifth image, as indicated by the arrow 227. For example, the display driver circuitry 120 may store the fifth image in the memory 130, as indicated by the arrow 228. As a non-limiting example, storing the fifth image in the memory 130 may be executed for re-displaying the fifth image. As a non-limiting example, storing the fifth image in the memory 130 may be executed to reduce the occurrence of the afterimage on the display panel 140. As a non-limiting example, storing the fifth image in the memory 130 may be executed to reduce the occurrence of the flickering on the display panel 140. For example, the time interval 204 may be a time interval between the timing at which the transmission of the fourth image is executed (e.g., the timing indicated by the arrow 294-1) and the timing at which the transmission of the fifth image is executed (e.g., the timing indicated by the arrow 294-2). For example, the time interval 204 may be determined by the transmission of the fifth image executed after the transmission of the fourth image. For example, a length of the vertical synchronization signal for the display driver circuitry 120 may be determined according to the transmission of the fourth image at the timing indicated by the arrow 294-1 and the transmission of the fifth image at the timing indicated by the arrow 294-2. For example, the length may correspond to the time interval 204.

For example, the display driver circuitry 120 may re-display the fifth image on the display panel 140, by scanning the fifth image stored in the memory 130, as indicated by the arrow 229. For example, re-displaying the fifth image on the display panel 140 by scanning the fifth image stored in the memory 130 may be transparent to the processor 110. For example, since the processor 110 cannot identify re-displaying the fifth image, the processor 110 may execute the image transmission through the first interface 111, at the second timings identified from the timing (e.g., a start timing of the transmission of the fourth image) indicated by the arrow 294-1, based on the shortest length, within the second time interval 250.

For example, since timings indicated by the arrow 294-6 among the fourth timings are related to the image transmission (e.g., the transmission of the fifth image), as in the state 215, the timings indicated by the arrow 294-6 among the fourth timings may be identified by the processor 110. On the other hand, since timings indicated by the arrow 294-7 among the fourth timings are related to the re-display of the fifth image, which is transparent to the processor 110, the timings indicated by the arrow 294-7 among the fourth timings may not be identified by the processor 110 for the image transmission. Since the timings indicated by the arrow 294-7 are transparent to the processor 110 or are not identified by the processor 110, the processor 110 may execute the image transmission through the first interface 111 based on the timings (e.g., the second timings) indicated by the arrow 294-3, within the second time interval 250.

As described above, the processor 110 may execute the image transmission through the first interface 111, based on the second timings, within the second time interval 250. For example, the processor 110 may refrain from or bypass executing the image transmission through the first interface 111, based on the fourth timings among the third timings and the fourth timings, within the second time interval 250.

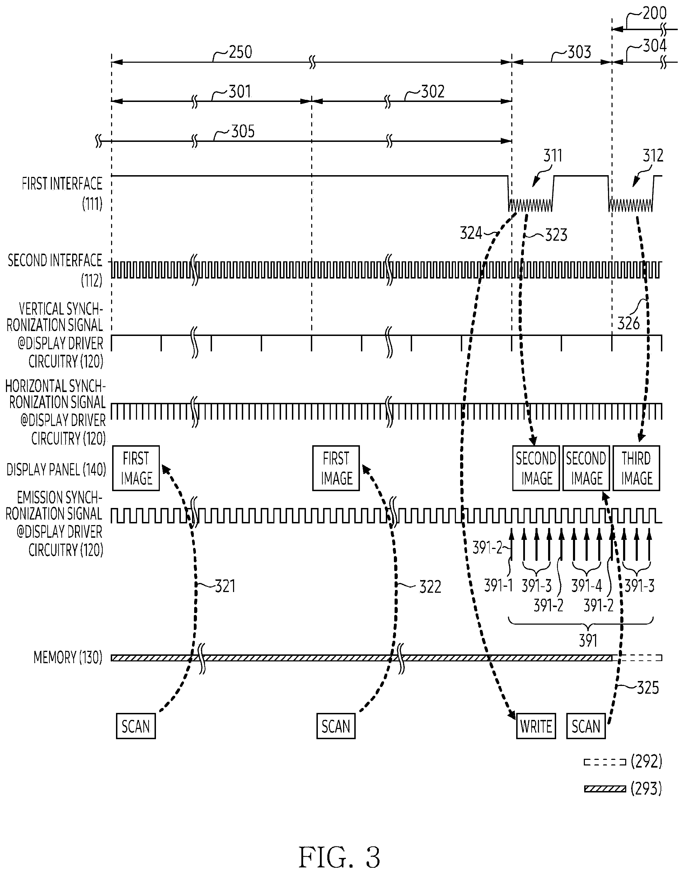

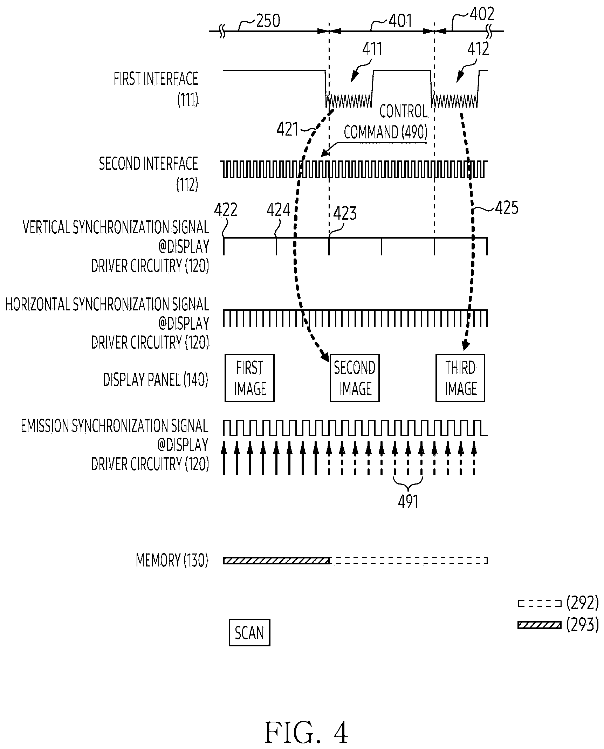

Referring back to 1, in at least another portion of the first time interval, the processor 110 may execute the image transmission through the first interface 111, at a timing identified from a start timing of an initial image transmission within the at least another portion of the first time interval based on the shortest length. For example, the processor 110 may execute the image transmission within the at least another portion of the first time interval, similarly to the image transmission within the second time interval 250. The image transmission executed within the at least another portion of the first time interval may be exemplified in descriptions of FIGS. 3 and 4.

FIG. 3 and FIG. 4 illustrate an example of an image transmission in at least another portion of a first time interval.

Referring to FIG. 3, the processor 110 may periodically transmit the pulse signal to the display driver circuitry 120 through the second interface 112. For example, since a period of the pulse signal corresponds to a period of the horizontal synchronization signal for the processor 110, a horizontal synchronization signal for the display driver circuitry 120 may be synchronized with the horizontal synchronization signal for the processor 110. Although not illustrated in FIG. 3, as exemplified in the description of FIG. 1, a vertical synchronization signal for the display driver circuitry 120 may be synchronized with the vertical synchronization signal for the processor 110, based on the pulse signal. Although not illustrated in FIG. 3, as exemplified in the description of FIG. 1, an emission synchronization signal for the display driver circuitry 120 may be synchronized with the emission synchronization signal for the processor 110, based on the pulse signal.

For example, the display driver circuitry 120 may display a first image on the display panel 140, based on scanning the first image stored in the memory 130, as indicated by the arrow 321, within the second time interval 250. For example, the display of the first image may be re-displaying the first image. For example, the display driver circuitry 120 may re-display the first image on the display panel 140, based on scanning the image stored in the memory 130, as indicated by the arrow 322, within the second time interval 250.

For example, the re-display of the first image, which is respectively indicated by the arrows 321 and 322, may be transparent to the processor 110. As a non-limiting example, since the re-display of the first image is transparent to the processor 110, the processor 110 may identify a refresh rate corresponding to a time interval (not illustrated in FIG. 3) between a timing used for a transmission of the first image and a timing (e.g., a timing indicated by the arrow 391-1) used for a transmission of the second image (e.g., state 311) as a refresh rate of the first image. For example, the refresh rate of the first image identified by the processor 110 may be different from a refresh rate of the first image identified by the display driver circuitry 120 (e.g., the refresh rate corresponding to the time interval 301 and the refresh rate corresponding to the time interval 302). Meanwhile, the refresh rate of the first image identified by the processor 110 may be lower than or equal to the reference refresh rate.

For example, the processor 110 may execute a third image transmission from the processor 110 to the display driver circuitry 120 through the first interface 111, within the at least another portion of the first time interval from a timing at which the second maximum refresh rate is changed to the first maximum refresh rate. For example, the processor 110 may execute a fourth image transmission from the processor 110 to the display driver circuitry 120 through the first interface 111, at a timing identified from a start timing of a transmission of the third image, based on the shortest length, within the at least another portion of the first time interval.

For example, the processor 110 may transmit the second image to the display driver circuitry 120 through the first interface 111, as in a state 311, based on the timing indicated by the arrow 391-1. For example, the transmission of the second image may correspond to the third image transmission. For example, the display driver circuitry 120 may display the second image on the display panel 140 by scanning the second image, as indicated by the arrow 323.

For example, the display driver circuitry 120 may store the second image in the memory 130, as indicated by the arrow 324. For example, displaying a new image (e.g., the second image) after an image that is maintained for a certain time on the display panel 140, such as the first image, may cause the afterimage on the display panel 140. The display driver circuitry 120 may store the second image in the memory 130 for the re-display of the second image indicated by the arrow 325 to reduce the afterimage. For example, storing the second image may be executed independently of a control command from the processor 110. For example, even when a control command indicating to bypass or to refrain from storing an image in the memory 130 is received from the processor 110 before the second image is received, the display driver circuitry 120 may store the second image in the memory 130.

For example, the display driver circuitry 120 may re-display the second image on the display panel 140 by scanning the second image stored in the memory 130, as indicated by the arrow 325. For example, the display driver circuitry 120 may execute re-displaying the second image by storing the second image and scanning the second image in the memory 130, based on a time interval 302 (e.g., a time interval corresponding to a refresh rate lower than or equal to the reference refresh rate). For example, the display driver circuitry 120 may execute re-displaying the second image by storing the second image and scanning the second image in the memory 130, based on a refresh rate (e.g., a refresh rate corresponding to the time interval 302) prior to a timing indicated by the arrow 391-1, which is a timing at which the refresh rate (e.g., the second maximum refresh rate) lower than or equal to the reference refresh rate is changed to the first maximum refresh rate higher than the reference refresh rate. For example, the display driver circuitry 120 may execute re-displaying the second image by storing the second image and scanning the second image in the memory 130, based on a time interval 305 during which the first image is maintained on the display panel 140. For example, the display driver circuitry 120 may execute re-displaying the second image by storing the second image and scanning the second image in the memory 130, further based on the second image different from the first image.

For example, re-displaying, on the display panel 140, the second image stored in the memory 130 by scanning it may be transparent to the processor 110. For example, since the processor 110 cannot identify re-displaying the second image, the processor 110 may execute the image transmission through the first interface 111, at a timing identified from a start timing of a transmission of the second image, such as the state 311, based on the shortest length, within at least another portion 303 of the first time interval exemplified in the description of FIG. 2.

For example, the at least another portion 303 of the first time interval may be initiated from a timing at which the second maximum refresh rate is changed to the first maximum refresh rate (e.g., a timing indicated by the arrow 391-1). For example, the timing may be a start timing of an initial image transmission executed after the second maximum refresh rate is changed to the first maximum refresh rate.

For example, timings of an emission synchronization signal within the at least another portion 303 of the first time interval, which are timings indicated by the arrow 391, may include fifth timings (e.g., timings indicated by the arrow 391-2) identified from a timing indicated by the arrow 391-1 based on the shortest length and sixth timings (e.g., timings (e.g., timings indicated by the arrow 391-3 and the arrow 391-4) between the timings indicated by the arrow 391-2) between the fifth timings.

For example, since timings indicated by the arrow 391-3 among the sixth timings are related to the image transmission (e.g., the transmission of the second image, a transmission of a third image), as in each of the state 311 and a state 312, the timings indicated by the arrow 391-3 among the sixth timings may be identified by the processor 110. On the other hand, since timings indicated by the arrow 391-4 among the sixth timings are related to the re-display of the second image, which is transparent to the processor 110, the timings indicated by the arrow 391-4 among the sixth timings may not be identified by the processor 110 for the image transmission within at least another portion 303 of the first time interval. Since the timings indicated by the arrow 391-4 are not identified by the processor 110, the processor 110 may execute the image transmission through the first interface 111, based on the timings indicated by the arrow 391-2, within the at least another portion 303 of the first time interval. For example, an interval between the timings indicated by the arrow 391-2 may correspond to the shortest length, or may be equal to the shortest length.

Meanwhile, the display driver circuitry 120 may disable the memory 130 after the re-display of the second image, as indicated by the bar 292 and the bar 293.

Meanwhile, the processor 110 may transmit, to the display driver circuitry 120 through the first interface 111, a third image subsequent to the second image, as in a state 312. For example, even when the third image may be transmitted to the display driver circuitry 120 at at least a portion of the timings indicated by the arrow 391-4, the processor 110 may refrain from transmitting the third image at the at least a portion of the timings indicated by the arrow 391-4 and transmit the third image at a timing indicated by the arrow 391-2, as in the state 312. For example, the processor 110 may delay transmitting the third image. Meanwhile, a time interval 304 related to the third image may be included in at least a portion 200 of the first time interval subsequent to at least another portion 303 of the first time interval.

For example, the display driver circuitry 120 may display the third image on the display panel 140 by scanning the third image, as indicated by the arrow 326.

As described above, the processor 110 may execute the image transmission through the first interface 111, based on the fifth timings, within the at least another portion 303 of the first time interval from a timing at which the second maximum refresh rate is changed to the first maximum refresh rate. For example, the processor 110 may refrain from or bypass executing the image transmission through the first interface 111 based on the sixth timings, within the at least another portion 303 of the first time interval. For example, the processor 110 may execute the image transmission through the first interface 111 based on the timings of the emission synchronization signal (e.g., the length of the emission period), within at least a portion 200 of the first time interval subsequent to the at least another portion 303 of the first time interval.

The at least another portion of the first time interval may be initiated after a control command, which indicates to bypass or to refrain from storing an image from the processor 110 in the memory 130 or indicates to disable the memory 130, is received. The image transmission within the at least another portion of the first time interval initiated after the control command may be exemplified in the description of FIG. 4.

Referring to FIG. 4, the processor 110 may periodically transmit the pulse signal to the display driver circuitry 120 through the second interface 112. For example, since a period of the pulse signal corresponds to a period of the horizontal synchronization signal for the processor 110, a horizontal synchronization signal for the display driver circuitry 120 may be synchronized with the horizontal synchronization signal for the processor 110. Although not illustrated in FIG. 4, as exemplified in the description of FIG. 1, a vertical synchronization signal for the display driver circuitry 120 may be synchronized with the vertical synchronization signal for the processor 110, based on the pulse signal. Although not illustrated in FIG. 4, as exemplified in the description of FIG. 1, an emission synchronization signal for the display driver circuitry 120 may be synchronized with the emission synchronization signal for the processor 110, based on the pulse signal.

For example, the display driver circuitry 120 may display a first image on the display panel 140 by scanning the first image stored in the enabled memory 130, like the bar 293, within the second time interval 250. As a non-limiting example, enabling the memory 130 may be executed based on a control command from the processor 110 that indicates storing an image in the memory 130. For example, the display of the first image may be a re-display of the first image.

For example, the display driver circuitry 120 may obtain a control command 490 from the processor 110, after the re-display of the first image. For example, the control command 490 may indicate bypassing or refraining from storing an image from the processor 110 in the memory 130 or disabling the memory 130. Although not illustrated in FIG. 4, the control command 490 may be indicated by the pulse signal received through the second interface 112. However, it is not limited thereto.

For example, since the control command 490 may indicate a change from the second maximum refresh rate to the first maximum refresh rate, the at least another portion of the first time interval exemplified in the description of FIG. 2 may be initiated after the control command 490. For example, the at least another portion of the first time interval may include a time interval 401.

For example, the processor 110 may transmit, to the display driver circuitry 120 through the first interface 111, a second image, after the control command 490 is obtained, as in a state 411. For example, the display driver circuitry 120 may display the second image on the display panel 140 by scanning the second image, as indicated by the arrow 421.

For example, the display driver circuitry 120 may disable the memory 130 as indicated by the bar 292 and the bar 293, after the control command 490 is obtained. For example, the display driver circuitry (120) may disable the memory 130, based on a time at which the first image is maintained on the display panel 140 (or a time at which the first image was last displayed (e.g., a time from the timing 422 to a timing 423, a time from a timing 424 to the timing 423, or a time from the timing 422 to the timing 424)). For example, the display driver circuitry 120 may disable the memory 130, based on the control command 490. For example, the display driver circuitry 120 may display the second image on the display panel 140, based on bypassing storing the second image in the memory 130, according to disabling the memory 130. According to embodiments, unlike the illustration in FIG. 4, the display driver circuitry 120 may re-display the second image by storing the second image in the memory 130 and scanning the second image stored in the memory 130, after receiving the control command 490.

For example, the processor 110 may refrain from or delay executing the image transmission at timings indicated by the arrow 491, within the time interval 401 included in the at least another portion of the first time interval. For example, the processor 110 may refrain from executing the image transmission at the timings indicated by the arrow 491, within the at least another portion of the first time interval during which the display driver circuitry 120 may display an image by scanning the image in the memory 130 to reduce the afterimage and/or the flickering, after providing the control command 490 to the display driver circuitry 120. As a non-limiting example, the at least another portion of the first time interval may be two or three times the shortest length.

As a non-limiting example, whether the display driver circuitry 120 stores the second image in the memory 130 and whether the display driver circuitry 120 scans the second image in the memory 130 may be transparent to the processor 110, and the re-display of the first image within the second time interval 250 may be transparent to the processor 110. For example, since above operations of the display driver circuitry 120 are transparent to the processor 110, the processor 110 may transmit a third image subsequent to the second image, at a timing identified from a start timing of the transmission of the second image based on the shortest length, within the at least another portion of the first time interval initiated after providing the control command 490 to the display driver circuitry 120.

For example, even when the third image is obtained before the timings indicated by the arrow 491, the processor 110 may delay transmitting the third image to the display driver circuitry 120 through the first interface 111. For example, the processor 110 may transmit the third image to the display driver circuitry 120 through the first interface 111, after the timings indicated by the arrow 491, as in a state 412. For example, the display driver circuitry 120 may display the third image on the display panel 140 by scanning the third image, as indicated by the arrow 425.

For example, the processor 110 may execute the image transmission through the first interface 111, based on the length of the emission period, within the at least a portion of the first time interval after the at least another portion of the first time interval. For example, according to setting of the processor 110, the time interval 402 may be included within the at least a portion of the first time interval, or may be included within the at least another portion of the first time interval.

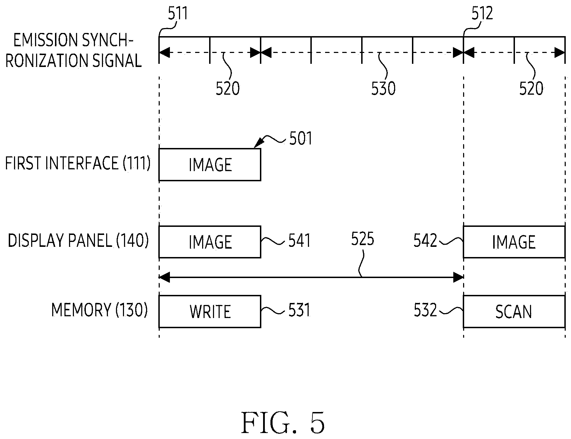

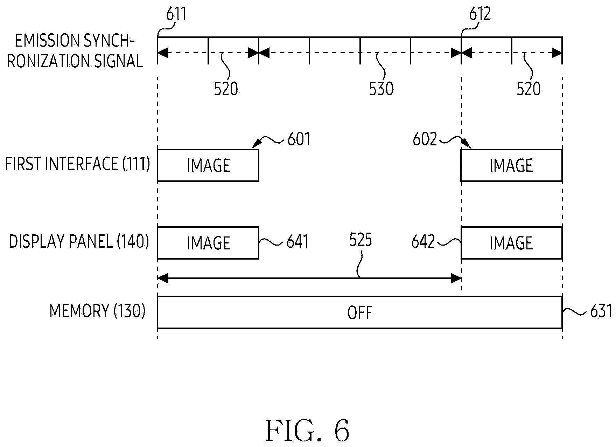

The image transmission (e.g., the image transmission exemplified in the description of FIG. 4) that is executed based on the shortest length within the at least another portion of the first time interval after a change from the second maximum refresh rate to the first maximum refresh rate may be replaced. For example, when a timing of a re-display of an image executed by the display driver circuitry 120 is set or predetermined, the processor 110 may execute the image transmission based on the length of the emission period after the change from the second maximum refresh rate to the first maximum refresh rate. For example, the timing of the re-display of the image may be exemplified in descriptions of FIG. 5 and FIG. 6.

FIG. 5 illustrates an example of a re-display of an image that starts after a reference time from a start timing of a display of the image while memory in display driver circuitry is being enabled.

Referring to FIG. 5, the processor 110 may transmit, to the display driver circuitry 120 through the first interface 111, an image, at a timing 511, based on an emission synchronization signal for the processor 110, as in a state 501. For example, the display driver circuitry 120 may execute storing 531 the image in the memory 130. For example, storing 531 of the image may be executed based on a control command provided from the processor 110 to the display driver circuitry 120, before the image is received. For example, the control command may indicate a change from the first maximum refresh rate to the second maximum refresh rate. For example, the control command may indicate storing at least one image including the image. For example, the control command may indicate enabling the memory 130. For example, the display driver circuitry 120 may execute displaying 541 the image on the display panel 140. For example, transmitting of the image as in the state 501, storing 531 of the image, and displaying 541 of the image may be executed during a shortest length (e.g., 1/120 seconds (s)) 520 of a time interval capable of executing displaying on the display panel 140. For example, the shortest length 520 may correspond to a maximum frequency supportable by the first interface 111.

For example, the display driver circuitry 120 may identify whether a reference time 525 has elapsed from a timing 511, which is a start timing of a display of the image (or transmission of the image). For example, the display driver circuitry 120 may execute scanning 532 the image stored in the memory 130, in response to a timing 512 being after the reference time 525 from the timing 511. For example, the display driver circuitry 120 may execute re-displaying 542 the image, based on scanning 532 the image. For example, scanning 532 of the image and re-displaying of the image may be executed within the shortest length 520.

For example, the display driver circuitry 120 may refrain from executing re-displaying 542 the image, before the reference time 525 has elapsed from the timing 511. For example, since the processor 110 recognizes the timing 511, the reference time 525, and the shortest length 520, the processor 110 may recognize that the display driver circuitry 120 does not execute re-displaying the image within a time interval 530.

FIG. 6 illustrates an example of a re-display of an image that starts after a reference time from a start timing of a display of the image while memory in display driver circuitry is being disabled.

Referring to FIG. 6, the processor 110 may transmit, to the display driver circuitry 120 through the first interface 111, an image, at a timing 611 based on an emission synchronization signal for the processor 110, as in a state 601. For example, the display driver circuitry 120 may execute displaying 641 the image on the display panel 140. For example, transmitting of the image as in the state 601 and displaying 641 of the image may be executed during the shortest length (e.g., 1/120 s) 520 of a time interval capable of executing displaying on the display panel 140. For example, the shortest length 520 may correspond to a maximum frequency supportable by the first interface 111. For example, the memory 130 may be disabled while the image is received and the image is displayed. For example, the memory 130 may be in an off state 631. For example, disabling the memory 130 may be executed based on a control command provided from the processor 110 to the display driver circuitry 120 before the image is received. For example, the control command may indicate a change from the second maximum refresh rate to the first maximum refresh rate. For example, the control command may indicate bypassing (or refraining from) storing at least one image including the image. For example, the control command may indicate disabling the memory 130.

For example, the processor 110 may identify whether a reference time 525 has elapsed from the timing 611, which is a start timing of a display of the image (or transmission of the image). For example, the processor 110 may re-transmit, to the display driver circuitry 120 through the first interface 111, the image, as in a state 602, in response to a timing 612 after the reference time 525 from the timing 611. For example, the processor 110 may re-transmit the image, based on identifying that the reference time 525 has elapsed from the timing 611 and that a new image subsequent to the image has not been obtained. For example, the re-transmission of the image may be executed to reduce occurrence of an afterimage and/or flickering on the display panel 140. For example, the display driver circuitry 120 may execute re-displaying 642 the image on the display panel 140. For example, transmitting of the image as in the state 602 and displaying 642 of the image may be executed during the shortest length (e.g., 1/120 s) 520 of a time interval capable of executing displaying on the display panel 140.

For example, the processor 110 may refrain from executing re-displaying 642 of the image before the reference time 525 has elapsed from the timing 611. For example, since the processor 110 recognizes the timing 611, the reference time 525, and the shortest length 520, the processor 110 may recognize that the display driver circuitry 120 does not execute re-displaying the image within the time interval 530.

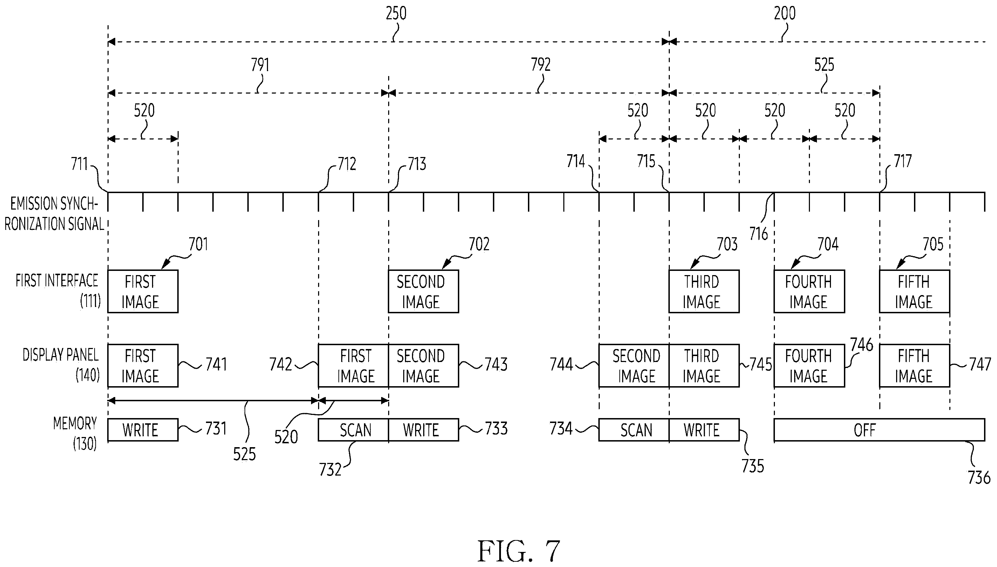

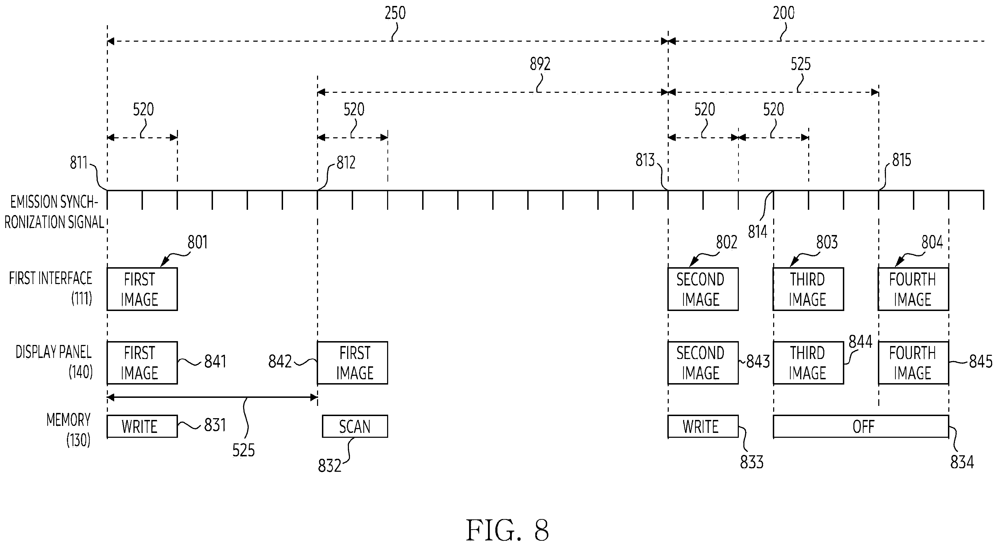

For example, when the processor 110 and the display driver circuitry 120 execute re-displaying of an image from a timing being after a reference time (e.g., the reference time 525) from a start timing of a display (or image transmission) of the image as exemplified in the description of FIGS. 5 and 6, the processor 110 may execute the image transmission based on the length of the emission period without executing the image transmission based on the shortest length after the change from the first maximum refresh rate to the second maximum refresh rate. For example, when the processor 110 and the display driver circuitry 120 execute re-displaying of an image from a timing being after the reference time (e.g., the reference time 525) from a start timing of a display (or image transmission) of the image as exemplified in the description of FIGS. 5 and 6, the at least another portion of the first time interval may not be used or defined. The image transmission within the first time interval after the change from the first maximum refresh rate to the second maximum refresh rate may be exemplified in descriptions of FIGS. 7 and 8.

FIGS. 7 and 8 illustrate an example of an image transmission in a first time interval after a change from a first maximum refresh rate to a second maximum refresh rate.

Referring to FIG. 7, the processor 110 may transmit, to the display driver circuitry 120 through the first interface 111, a first image, from a timing 711, as in a state 701, within a second time interval 250. For example, the display driver circuitry 120 may execute storing 731 the first image. For example, storing 731 of the first image 731 may be executed based on a control command provided from the processor 110 to the display driver circuitry 120 before the first image is received. For example, the control command may indicate a change from the first maximum refresh rate to the second maximum refresh rate. For example, the control command may indicate storing at least one image including the first image until another control command is obtained. For example, the control command may indicate enabling the memory 130. For example, the display driver circuitry 120 may execute displaying 741 the first image on the display panel 140. For example, transmitting of the first image as in the state 701, storing 731 of the first image, and displaying 741 of the first image may be executed during a shortest length (e.g., 1/120 s) 520 of a time interval capable of executing displaying on the display panel 140. For example, the shortest length 520 may correspond to a maximum frequency supportable by the first interface 111.

For example, the display driver circuitry 120 may identify whether the reference time 525 has elapsed from the timing 711, which is a start timing of a display of the first image (or transmission of the image). For example, the display driver circuitry 120 may execute scanning 732 the first image stored in the memory 130, in response to a timing 712 after the reference time 525 from the timing 711. For example, the display driver circuitry 120 may execute re-displaying 742 the first image, based on scanning 732 of the first image. For example, scanning 732 of the first image and re-displaying 742 of the first image may be executed within a shortest length 520.

For example, the processor 110 may transmit, to the display driver circuitry 120 through the first interface 111, a second image, from a timing 713, as in a state 702, within the second time interval 250. For example, the processor 110 may execute the transmission of the second image at the timing 713 identified from the timing 711, based on the shortest length 520. For example, a time length 791 between the timing 711 and the timing 713 may be a multiple of the shortest length 520.

For example, the display driver circuitry 120 may execute storing 733 the second image 733. For example, storing 733 of the second image may be executed based on the control command. For example, the display driver circuitry 120 may execute displaying 743 of the second image on the display panel 140. For example, transmitting of the second image as in the state 702, storing 733 of the second image, and displaying 743 of the second image may be executed during a shortest length 520 of a time interval capable of executing displaying on the display panel 140. For example, the shortest length 520 may correspond to a maximum frequency supportable by the first interface 111.

For example, the display driver circuitry 120 may identify whether the reference time 525 has elapsed from the timing 713, which is a start timing of a display of the second image (or transmission of the image). For example, the display driver circuitry 120 may execute scanning 734 the second image stored in the memory 130, in response to a timing 714 after the reference time 525 from the timing 713. For example, the display driver circuitry 120 may execute re-displaying 744 the second image, based on scanning 734 of the second image. For example, scanning 734 of the second image and re-displaying 744 of the second image may be executed within the shortest length 520.

For example, the processor 110 may transmit, to the display driver circuitry 120 through the first interface 111, a third image, from a timing 715, as in a state 703. As a non-limiting example, the timing 715 may be identified from the timing 713, based on the shortest length 520. For example, a time length 792 between the timing 713 and the timing 715 may be a multiple of the shortest length 520. However, it is not limited thereto.

For example, the processor 110 may provide the other control command to the display driver circuitry 120, before transmitting the third image. For example, the other control command may indicate a change from the second maximum refresh rate to the first maximum refresh rate. For example, the control command may indicate bypassing (or refraining from) storing at least one image including the third image until the control command is obtained. For example, the other control command may indicate disabling the memory 130. For example, when the other control command is provided to the display driver circuitry 120 before the third image is transmitted, a transmission of the third image may be executed within at least a portion 200 of the first time interval. However, it is not limited thereto.

For example, the display driver circuitry 120 may execute storing 735 the third image. For example, the display driver circuitry 120 may execute storing 735 of the third image in the memory 130 to reduce occurrence of an afterimage on the display panel 140. For example, storing 735 of the third image may be executed independently of the other control commands. For example, the display driver circuitry 120 may execute displaying 745 the third image on the display panel 140. For example, transmitting of the third image as in the state 703, storing 735 of the third image, and displaying 745 of the third image may be executed during the shortest length 520 of the time interval capable of executing displaying on the display panel 140. For example, the shortest length 520 may correspond to a maximum frequency supportable by the first interface 111.

For example, the display driver circuitry 120 may identify whether the reference time 525 has elapsed from the timing 715, which is a start timing of a display of the third image (or transmission of the image).

For example, before the reference time 525 has elapsed from the timing 715, the processor 110 may transmit, to the display driver circuitry 120 through the first interface 111, a fourth image, at a timing 716, as in a state 704. For example, the transmission of the fourth image at the timing 716 may be the image transmission executed within the at least a portion 200 of the first time interval (or within the first time interval). For example, the processor 110 may identify a timing for the transmission of the fourth image, based on the length of the emission period (or the emission synchronization signal). For example, a time length between the timing 715 and the timing 716 may not be a multiple of the shortest length 520. For example, since the timing 716 is a timing before the reference time 525 has elapsed from the timing 715, the processor 110 may transmit the fourth image at the timing 716.

For example, the display driver circuitry 120 may execute displaying 746 the fourth image on the display panel 140. For example, the display driver circuitry 120 may execute disabling 736 the memory 130, in response to the fourth image received from the timing 716. For example, a state of the memory 130 may be changed to an off state, in response to the fourth image. For example, transmitting of the fourth image as in the state 704 and displaying 746 of the fourth image may be executed during the shortest length 520 of a time interval capable of executing displaying on the display panel 140. For example, the shortest length 520 may correspond to a maximum frequency supportable by the first interface 111.

For example, the processor 110 may transmit, to the display driver circuitry 120 through the first interface 111, a fifth image, at a timing 717, as in a state 705. For example, the transmission of the fifth image at the timing 717 may be the image transmission executed within the at least a portion 200 of the first time interval (or within the first time interval). For example, the processor 110 may identify a timing for the transmission of the fifth image, based on the length of the emission period (or the emission synchronization signal). For example, a time length between the timing 716 and the timing 717 may not be a multiple of the shortest length 520.

For example, the display driver circuitry 120 may execute displaying 747 the fifth image on the display panel 140. For example, transmitting of the fifth image as in the state 705 and displaying 747 of the fifth image may be executed during the shortest length 520 of a time interval capable of executing displaying on the display panel 140. For example, the shortest length 520 may correspond to a maximum frequency supportable by the first interface 111.

Referring to FIG. 8, the processor 110 may transmit, to the display driver circuitry 120 through the first interface 111, a first image, from a timing 811, as in a state 801, within the second time interval 250. For example, the display driver circuitry 120 may execute storing 831 the first image. For example, storing 831 of the first image may be executed based on a control command provided from the processor 110 to the display driver circuitry 120, before the first image is received. For example, the control command may indicate a change from the first maximum refresh rate to the second maximum refresh rate. For example, the control command may indicate storing at least one image including the first image until another control command is obtained. For example, the control command may indicate enabling the memory 130. For example, the display driver circuitry 120 may execute displaying 841 the first image on the display panel 140. For example, transmitting of the first image as in the state 801, storing 831 of the first image, and displaying 841 of the first image may be executed during a shortest length (e.g., 1/120 s) 520 of a time interval capable of executing displaying on the display panel 140. For example, the shortest length 520 may correspond to a maximum frequency supportable by the first interface 111.

For example, the display driver circuitry 120 may identify whether the reference time 525 has elapsed from the timing 811, which is a start timing of a display of the first image (or transmission of the image). For example, the display driver circuitry 120 may execute scanning 832 the first image stored in the memory 130, in response to a timing 812 after the reference time 525 from the timing 811. For example, the display driver circuitry 120 may execute re-displaying 842 the first image, based on scanning 832 of the first image. For example, scanning 832 of the first image and re-displaying 842 of the first image may be executed within the shortest length 520.

For example, the display driver circuitry 120 may reduce a refresh rate of the first image, within the second time interval 250, to reduce power consumed for displaying on the display panel 140. Although not illustrated in FIG. 8, the display driver circuitry 120 may execute at least one scan of the first image to gradually reduce the refresh rate of the first image. For example, a timing of the scan may be identified based on the reference time 525.

For example, the processor 110 may transmit, to the display driver circuitry 120 through the first interface 111, a second image, from a timing 813, as in a state 802. As a non-limiting example, the timing 813 may be identified from the timing 812, based on the shortest length 520. For example, a time length 892 between the timing 812 and the timing 813 may be a multiple of the shortest length 520. However, it is not limited thereto.

For example, the processor 110 may provide the other control command to the display driver circuitry 120, before transmitting the second image. For example, the other control command may indicate a change from the second maximum refresh rate to the first maximum refresh rate. For example, the control command may indicate bypassing (or refraining from) storing at least one image including the second image until the control command is obtained. For example, the other control command may indicate disabling the memory 130. For example, when the other control command is provided to the display driver circuitry 120 before the second image is transmitted, a transmission of the second image may be executed within at least a portion 200 of the first time interval. However, it is not limited thereto.

For example, the display driver circuitry 120 may execute storing 833 the second image. For example, the display driver circuitry 120 may execute storing 833 of the second image in the memory 130, to reduce occurrence of an afterimage (and/or flickering) on the display panel 140. For example, storing 833 of the second image may be executed independently of the other control commands. For example, the display driver circuitry 120 may execute displaying 843 the second image on the display panel 140. For example, transmitting of the second image as in the state 802, storing 833 of the second image, and displaying 843 of the second image may be executed during a shortest length 520 of a time interval capable of executing displaying on the display panel 140. For example, the shortest length 520 may correspond to a maximum frequency supportable by the first interface 111.

For example, the display driver circuitry 120 may identify whether a reference time 525 has elapsed from the timing 813, which is a start timing of a display of the second image (or transmission of the image).

For example, before the reference time 525 has elapsed from the timing 813, the processor 110 may transmit, to the display driver circuitry 120 through the first interface 111, a third image, at a timing 814, as in a state 803. For example, the transmission of the third image at the timing 814 may be the image transmission executed within at least a portion 200 of the first time interval (or within the first time interval). For example, the processor 110 may identify a timing for the transmission of the third image, based on the length of the emission period (or the emission synchronization signal). For example, a time length between the timing 813 and the timing 81) may not be a multiple of the shortest length 520. For example, since the timing 814 is a timing before the reference time 525 has elapsed from the timing 813, the processor 110 may transmit the third image at the timing 814.

For example, the display driver circuitry 120 may execute displaying 844 the third image on the display panel 140. For example, the display driver circuitry 120 may execute disabling 834 the memory 130, in response to the third image received from the timing 814. For example, a state of the memory 130 may be changed to an off state, in response to the third image. For example, transmitting of the third image as in the state 803 and displaying 844 of the third image may be executed during a shortest length 520 of a time interval capable of executing displaying on the display panel 140. For example, the shortest length 520 may correspond to a maximum frequency supportable by the first interface 111.

For example, the processor 110 may transmit, to the display driver circuitry 120 through the first interface 111, a fourth image, at a timing 815, as in a state 804. For example, the transmission of the fourth image at the timing 815 may be the image transmission executed within at least a portion 200 of the first time interval (or within the first time interval). For example, the processor 110 may identify a timing for the transmission of the fourth image, based on the length of the emission period (or the emission synchronization signal). For example, a time length between the timing 814 and the timing 815 may not be a multiple of the shortest length 520.

For example, the display driver circuitry 120 may execute displaying 845 the fourth image on the display panel 140. For example, transmitting of the fourth image as in the state 804 and displaying 845 of the fourth image may be executed during a shortest length 520 of a time interval capable of executing displaying on the display panel 140. For example, the shortest length 520 may correspond to a maximum frequency supportable by the first interface 111.

As described above, the processor 110 may execute the image transmission based on the length of the emission period, in response to changing the second maximum refresh rate to the first maximum refresh rate.

Referring back to FIG. 1, the processor 110 may provide, to the display driver circuitry 120, a control command indicating to enable the memory 130 within the at least a portion of the first time interval exemplified in the description of FIG. 2 to provide the second maximum refresh rate, and transmit, to the display driver circuitry 120 through a first interface, an image to be stored in the memory 130, after providing the control command.

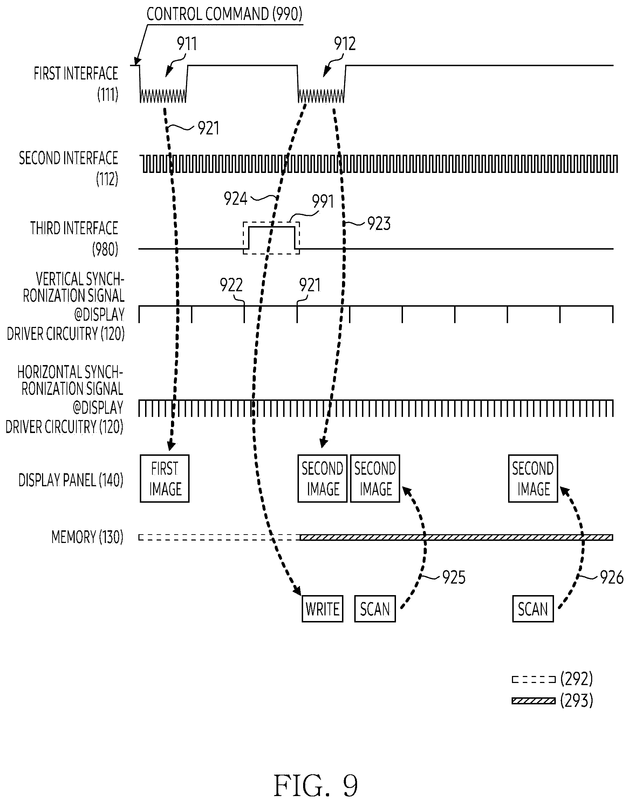

For example, in a process in which the control command is provided from the processor 110 to the display driver circuitry 120, a loss (or missing) of the control command may occur. For example, since the loss is transparent to the processor 110, the processor 110 may operate according to the second maximum refresh rate. For example, the processor 110 may not identify that a transmission of a new image to be displayed on the display panel 140 is required. For example, the display driver circuitry 120 may execute operations to request the transmission of the new image to be displayed on the display panel 140. The operations may be exemplified in the description of FIG. 9.

FIG. 9 illustrates an example of an operation executed in response to a loss of a control command from a processor to display driver circuitry.

Referring to FIG. 9, the processor 110 may periodically transmit the pulse signal to the display driver circuitry 120 through the second interface 112. For example, since a period of the pulse signal corresponds to a period of the horizontal synchronization signal for the processor 110, a horizontal synchronization signal for the display driver circuitry 120 may be synchronized with the horizontal synchronization signal for the processor 110. Although not illustrated in FIG. 9, as exemplified in the description of FIG. 1, a vertical synchronization signal for the display driver circuitry 120 may be synchronized with the vertical synchronization signal for the processor 110 based on the pulse signal.

For example, the processor 110 may provide, to the display driver circuitry 120, a control command 990 indicating to enable the memory 130, and then transmit the first image to the display driver circuitry 120 through the first interface 111, as in a state 911. For example, while the control command 990 is provided from the processor 110 to the display driver circuitry 120, a loss of the control command 990 may occur.

For example, since the display driver circuitry 120 does not obtain the control command 990 from the processor 110, unlike the first image that was successfully received, the display driver circuitry 120 may maintain disabling the memory 130, as in a bar 292. For example, the display driver circuitry 120 may display the first image on the display panel 140, as indicated by the arrow 921, based on bypassing storing the first image in the memory 130.

For example, since the processor 110 recognizes that the first image is stored in the memory 130 according to the control command 990, the processor 110 may not obtain a new image after transmitting the first image to the display driver circuitry 120. For example, after transmitting the first image, the processor 110 may change a state of the processor 110 from a wake-up state to a sleep state.

For example, the display driver circuitry 120 may provide a signal 991 to the processor 110, in response to identifying that an image subsequent to the first image is not received. For example, the signal 991 may be provided through a third interface 980. However, it is not limited thereto. For example, the signal 991 may also be provided through a second interface 112. As a non-limiting example, the signal 991 may be referred to as a tearing effect (TE) signal or a refresh window (RW) signal (or RW).

For example, the display driver circuitry 120 may provide the signal 991 before a timing at which a new image is required. As a non-limiting example, the display driver circuitry 120 may provide the signal 991 at a timing before a reference time from the timing. For example, the reference time may be identified, determined, defined, or configured based on a time at which a state of the processor 110 is changed from the sleep state to the wake-up state. For example, the display driver circuitry 120 may provide the signal 991 at a timing 922 of a vertical synchronization signal for the display driver circuitry 120 before a timing 921 at which a transmission of a new image is required to reduce occurrence of flickering (or timing 922 before a time corresponding to the shortest length from the timing 921. However, it is not limited thereto.

For example, in response to the signal 991, the processor 110 may transmit, to the display driver circuitry 120 through the first interface 111, a second image, as in a state 912. As a non-limiting example, the processor 110 may identify a time interval after transmitting the second image to the display driver circuitry 120 in response to the signal 991 as a second time interval 250.

For example, in response to the second image, the display driver circuitry 120 may enable the memory 130 as indicated by the bar 293, display the second image on the display panel 140 as indicated by the arrow 923, and store the second image in the memory 130 as indicated by the arrow 924. For example, the display driver circuitry 120 may re-display the second image on the display panel 140, based on scanning the second image from the memory 130, as indicated by the arrow 925.

For example, the display driver circuitry 120 may maintain enabling the memory 130, as in the bar 293, after the second image is received. For example, the display driver circuitry 120 may re-display the second image on the display panel 140, based on scanning the second image from the memory 130, as indicated by the arrow 926.

As described above, the electronic device 100 may maintain a quality of a service provided through the display 115 even when a loss of the control command 990 occurs.

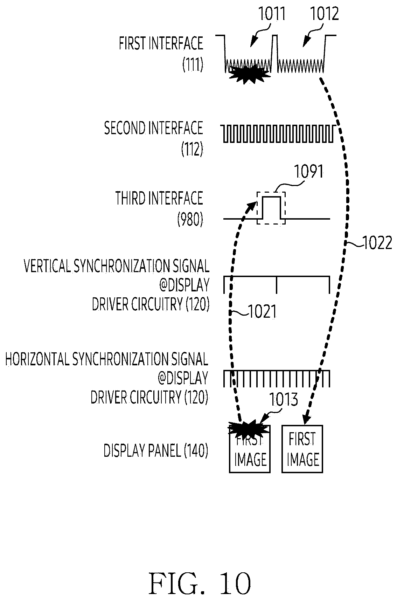

Referring back to FIG. 1, unlike the example of FIG. 9, while an image is being transmitted from the processor 110 to the display driver circuitry 120 through the first interface 111, a loss of the image may occur. For example, since the loss of the image is transparent to the processor 110, the display driver circuitry 120 may execute operations to request a transmission of the image. The operations may be exemplified in the description of FIG. 10.

FIG. 10 illustrates an example of an operation executed in response to a loss of an image from a processor to display driver circuitry.

Referring to FIG. 10, the processor 110 may periodically transmit the pulse signal to the display driver circuitry 120 through the second interface 112. For example, since a period of the pulse signal corresponds to a period of the horizontal synchronization signal for the processor 110, a horizontal synchronization signal for the display driver circuitry 120 may be synchronized with the horizontal synchronization signal for the processor 110. Although not illustrated in FIG. 10, as exemplified in the description of FIG. 1, a vertical synchronization signal for the display driver circuitry 120 may be synchronized with the vertical synchronization signal for the processor 110 based on the pulse signal.

For example, the processor 110 may transmit a first image to the display driver circuitry 120 through the first interface 111, as in a state 1011. While the first image is provided from the processor 110 to the display driver circuitry 120 through the first interface 111, a loss of the first image may occur.

For example, as in a state 1013, the loss of the first image may reduce the quality of the service provided through the display 115 or cause a failure in a display of the first image. For example, in response to detecting or identifying the loss of the image, the display driver circuitry 120 may provide a signal 1091 to the processor 110, as indicated by the arrow 1021. As a non-limiting example, the signal 1091 may be referred to as a TE signal or a RW signal. For example, the signal 1091 may be provided through a third interface 980. However, it is not limited thereto. For example, the signal 1091 may also be provided through a second interface 112. For example, the signal 1091 may also be configured as the signal 991 of FIG. 9.

For example, in response to the signal 1091, the processor 110 may transmit again the first image to the display driver circuitry 120 through the first interface 111, as in a state 1012.

For example, the display driver circuitry 120 may display the first image on the display panel 140 by scanning the first image, as indicated by the arrow 1022.

As described above, the electronic device 100 may maintain the quality of the service provided through the display 115 even when a loss of an image transmitted from the processor 110 occurs.

FIG. 11 is a block diagram illustrating an electronic device 1101 in a network environment 1100 according to various embodiments. Referring to FIG. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module(SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to an embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, an HDMI connector, a USB connector, a SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to an embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as Bluetooth^{™}, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 1164dB or less) for implementing mMTC, or U-plane latency (e.g., 0.5ms or less for each of downlink (DL) and uplink (UL), or a round trip of 11ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or loT-related technology.

FIG. 12 is a block diagram 1200 illustrating the display module 1160 according to various embodiments. Referring to FIG. 12, the display module 1160 may include a display 1210 and a display driver integrated circuit (DDI) 1230 to control the display 1210. The DDI 1230 may include an interface module 1231, memory 1233 (e.g., buffer memory), an image processing module 1235, or a mapping module 1237. The DDI 1230 may receive image information that contains image data or an image control signal corresponding to a command to control the image data from another component of the electronic device 1101 via the interface module 1231. For example, according to an embodiment, the image information may be received from the processor 1120 (e.g., the main processor 1121 (e.g., an application processor)) or the auxiliary processor 1123 (e.g., a graphics processing unit) operated independently from the function of the main processor 1121. The DDI 1230 may communicate, for example, with touch circuitry 1250 or the sensor module 1176 via the interface module 1231. The DDI 1230 may also store at least part of the received image information in the memory 1233, for example, on a frame by frame basis. The image processing module 1235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 1210. The mapping module 1237 may generate a voltage value or a current value corresponding to the image data pre-processed or post-processed by the image processing module 1235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 1210 may be driven, for example, based at least in part on the voltage value or the current value such that visual information (e.g., a text, an image, or an icon) corresponding to the image data may be displayed via the display 1210.

According to an embodiment, the display module 1160 may further include the touch circuitry 1250. The touch circuitry 1250 may include a touch sensor 1251 and a touch sensor IC 1253 to control the touch sensor 1251. The touch sensor IC 1253 may control the touch sensor 1251 to sense a touch input or a hovering input with respect to a certain position on the display 1210. To achieve this, for example, the touch sensor 1251 may detect (e.g., measure) a change in a signal (e.g., a voltage, a quantity of light, a resistance, or a quantity of one or more electric charges) corresponding to the certain position on the display 1210. The touch circuitry 1250 may provide input information (e.g., a position, an area, a pressure, or a time) indicative of the touch input or the hovering input detected via the touch sensor 1251 to the processor 1120. According to an embodiment, at least part (e.g., the touch sensor IC 1253) of the touch circuitry 1250 may be formed as part of the display 1210 or the DDI 1230, or as part of another component (e.g., the auxiliary processor 1123) disposed outside the display module 1160.

According to an embodiment, the display module 1160 may further include at least one sensor (e.g., a fingerprint sensor, an iris sensor, a pressure sensor, or an illuminance sensor) of the sensor module 1176 or a control circuit for the at least one sensor. In such a case, the at least one sensor or the control circuit for the at least one sensor may be embedded in one portion of a component (e.g., the display 1210, the DDI 1230, or the touch circuitry 1250)) of the display module 1160. For example, when the sensor module 1176 embedded in the display module 1160 includes a biometric sensor (e.g., a fingerprint sensor), the biometric sensor may obtain biometric information (e.g., a fingerprint image) corresponding to a touch input received via a portion of the display 1210. As another example, when the sensor module 1176 embedded in the display module 1160 includes a pressure sensor, the pressure sensor may obtain pressure information corresponding to a touch input received via a partial or whole area of the display 1210. According to an embodiment, the touch sensor 1251 or the sensor module 1176 may be disposed between pixels in a pixel layer of the display 1210, or over or under the pixel layer.

As described above, an electronic device 100 may comprise a processor 110, a display 115 that includes display driver circuitry 120 including memory 130 and a display panel 140, and an interface connecting the display driver circuitry 120 to the processor 110. According to an embodiment, the processor 110 may be configured to execute, through the interface, a first image transmission from the processor 110 to the display driver circuitry 120. According to an embodiment, the processor 110 may be configured to, in at least a portion of a first time interval providing a first maximum refresh rate higher than a reference refresh rate, execute, through the interface, a second image transmission from the processor 110 to the display driver circuitry 120 at first timings identified from a start timing of the first image transmission based on a length of an emission period for a display on the display panel 140. According to an embodiment, the processor 110 may be configured to, in a second time interval providing a second maximum refresh rate lower than or equal to the reference refresh rate, execute, through the interface, the second image transmission identified from the start timing based on a shortest length of a time interval capable of executing the display on the display panel 140 through the display driver circuitry 120. According to an embodiment, at least a portion of displays on the display panel 140 in the second time interval from among the at least a portion of the first time interval and the second time interval may be executed using the memory 130. According to an embodiment, the length may be shorter than the shortest length.

According to an embodiment, timings of an emission synchronization signal in the second time interval indicating the emission period may include third timings respectively overlapping the second timings, and fourth timings between the third timings.

According to an embodiment, the processor 110 may be configured to, in the second time interval, refrain from executing an image transmission from the processor 110 to the display driver circuitry 120 through the interface based on the fourth timings from among the third timings and the fourth timings.

According to an embodiment, the third timings may be positioned out of a portion of the second time interval scanning each of images stored in the memory for displaying again each of the images received through the interface from the processor 110. According to an embodiment, the fourth timings may be positioned in the portion of the second time interval.

According to an embodiment, the display driver circuitry 120 may be configured to, based on bypassing to store in the memory 130 each of first images received through the interface in accordance with the second image transmission executed in the at least a portion of the first time interval, display, on the display panel 140, each of the first images. According to an embodiment, the display driver circuitry 120 may be configured to, based on storing in the memory 130 each of second images received through the interface in accordance with the second image transmission executed in a portion of the second time interval, display, on the display panel 140, each of the second images.

According to an embodiment, the processor 110 may be configured to, in at least another portion of the first time interval being from a timing changing the second maximum refresh rate to the first maximum refresh rate, execute, through the interface, a third image transmission from the processor 110 to the display driver circuitry 120 according to the changing. According to an embodiment, the processor 110 may be configured to, in the at least another portion of the first time interval, execute, through the interface, a fourth image transmission from the processor 110 to the display driver circuitry 120 at a timing identified from a start timing of the third image transmission based on the shortest length. According to an embodiment, the processor 110 may be configured to, in the at least portion of the first time interval subsequent to the at least another portion of the first time interval, execute an image transmission from the processor 110 to the display driver circuitry 120 through the interface based on the length.

According to an embodiment, the processor 110 may be configured to, in the at least another portion of the first time interval, execute the third image transmission by transmitting a first image through the interface to the display driver circuitry 120. According to an embodiment, the processor 110 may be configured to, before an end timing of the time interval, having the shortest length, being from the start timing of the third image transmission, refrain from executing the fourth image transmission by transmitting a second image subsequent to the first image through the interface to the display driver circuitry 120. According to an embodiment, the processor 110 may be configured to, in the at least portion of the first time interval, execute the image transmission through the interface based on the length.

According to an embodiment, the display driver circuitry 120 may be configured to display the first image on the display panel 140 and store the first image in the memory 130. According to an embodiment, the display driver circuitry 120 may be configured to, before an end timing of the time interval, having the shortest length, being from the start timing of the third image transmission, display again the first image on the display panel 140 by scanning the first image stored in the memory 130.

According to an embodiment, the display driver circuitry 120 may be configured to, based on a refresh rate of an image that was displayed before the timing, execute displaying again the first image by storing the first image and scanning the first image in the memory 130.

According to an embodiment, the display driver circuitry 120 may be configured to, based on identifying that an image is maintained, on the display panel 140, in the second time interval being before the timing, during a time longer than a reference time, execute displaying again the first image by storing the first image and scanning the first image in the memory 130.

According to an embodiment, the display driver circuitry 120 may be configured to, based on the first image different from the image, execute displaying again the first image by storing the first image and scanning the first image in the memory 130.

According to an embodiment, the display driver circuitry 120 may be configured to, before the timing, obtain, from the processor 110, a control command indicating to execute a display on the display panel 140 by bypassing the memory 130. According to an embodiment, the display driver circuitry 120 may be configured to, after the control command is obtained, execute displaying again the first image by storing the first image and scanning the first image in the memory 130.

As described above, an electronic device 100 may comprise a processor 110, a display 115 that includes display driver circuitry 120 including memory 130 and a display panel 140, and an interface connecting the display driver circuitry 120 to the processor 110. According to an embodiment, the processor 110 may be configured to execute, through the interface, a first image transmission from the processor 110 to the display driver circuitry 120. According to an embodiment, the processor 110 may be configured to, in at least a portion of a first time interval that at least partially disables a scan of an image from the memory 130 for a display on the display panel 140, execute, from the processor 110 to the display driver circuitry 120 through the interface, a second image transmission, at first timings identified from a start timing of the first image transmission based on a length of an emission period for the display. According to an embodiment, the processor 110 may be configured to, in a second time interval that enables the scan, execute the second image transmission through the interface at second timings identified from the start timing, based on a shortest length of a time interval capable of executing the display through the display driver circuitry 120. According to an embodiment, the length may be shorter than the shortest length.

According to an embodiment, timings of an emission synchronization signal in the second time interval indicating the emission period may include third timings respectively overlapping the second timings, and fourth timings between the third timings.

According to an embodiment, the processor 110 may be configured to, in the second time interval, refrain from executing an image transmission from the processor 110 to the display driver circuitry 120 through the interface based on the fourth timings from among the third timings and the fourth timings.

According to an embodiment, the third timings may be positioned out of a portion of the second time interval for the scan. According to an embodiment, the fourth timings may be positioned within a portion of the second time interval.

According to an embodiment, the display driver circuitry 120 may be configured to, based on bypassing to store in the memory 130 each of first images received through the interface in accordance with the second image transmission executed in the at least a portion of the first time interval, display, on the display panel 140, each of the first images. According to an embodiment, the display driver circuitry 120 may be configured to, based on storing in the memory 130 each of second images received through the interface in accordance with the second image transmission executed in a portion of the second time interval, display, on the display panel 140, each of the second images.

According to an embodiment, the processor 110 may be configured to, in at least another portion of the first time interval being from a timing changing the second maximum refresh rate to the first maximum refresh rate, execute, through the interface, a third image transmission from the processor 110 to the display driver circuitry 120 according to the changing. According to an embodiment, the processor 110 may be configured to, in the at least another portion of the first time interval, execute, through the interface, a fourth image transmission from the processor 110 to the display driver circuitry 120 at a timing identified from a start timing of the third image transmission based on the shortest length. According to an embodiment, the processor 110 may be configured to, in the at least portion of the first time interval subsequent to the at least another portion of the first time interval, execute an image transmission from the processor 110 to the display driver circuitry 120 through the interface based on the length.

According to an embodiment, the processor 110

may be configured to, in the at least another portion of the first time interval, execute the third image transmission by transmitting a first image through the interface to the display driver circuitry 120. According to an embodiment, the processor 110 may be configured to, before an end timing of the time interval, having the shortest length, being from the start timing of the third image transmission, refrain from executing the fourth image transmission by transmitting a second image subsequent to the first image through the interface to the display driver circuitry 120. According to an embodiment, the processor 110 may be configured to, in the at least portion of the first time interval, execute the image transmission through the interface based on the length.

According to an embodiment, the display driver circuitry 120 may be configured to display the first image on the display panel 140 and store the first image in the memory 130. According to an embodiment, the display driver circuitry 120 may be configured to, before an end timing of the time interval, having the shortest length, being from the start timing of the third image transmission, display again the first image on the display panel 140 by scanning the first image stored in the memory 130.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100) comprising:
a processor (110);
a display (115) including:
display driver circuitry (120) including memory (130), and
a display panel (140); and
an interface connecting the display driver circuitry (120) to the processor (110),
wherein the processor (110) is configured to:
execute, through the interface, a first image transmission from the processor (110) to the display driver circuitry (120);
in at least a portion of a first time interval providing a first maximum refresh rate higher than a reference refresh rate, execute, through the interface, a second image transmission from the processor (110) to the display driver circuitry (120) at first timings identified from a start timing of the first image transmission based on a length of an emission period for a display on the display panel (140); and
in a second time interval providing a second maximum refresh rate lower than or equal to the reference refresh rate, execute, through the interface, the second image transmission at second timings identified from the start timing based on a shortest length of a time interval capable of executing the display on the display panel (140) through the display driver circuitry (120),
wherein at least a portion of displays on the display panel (140) in the second time interval from among the at least a portion of the first time interval and the second time interval is executed using the memory (130), and
wherein the length is shorter than the shortest length.

2. The electronic device (100) of claim 1, wherein timings of an emission synchronization signal in the second time interval indicating the emission period include:
third timings respectively overlapping the second timings, and
fourth timings between the third timings.

3. The electronic device (100) of claim 2, wherein the processor (110) is further configured to:
in the second time interval, refrain from executing an image transmission from the processor (110) to the display driver circuitry (120) through the interface based on the fourth timings from among the third timings and the fourth timings.

4. The electronic device (100) of claim 3, wherein the third timings are positioned out of a portion of the second time interval scanning each of images stored in the memory for displaying again each of the images received through the interface from the processor (110), and
wherein the fourth timings are positioned in the portion of the second time interval.

5. The electronic device (100) of claim 1, wherein the display driver circuitry (120) is configured to:
based on bypassing to store in the memory (130) each of first images received through the interface in accordance with the second image transmission executed in the at least a portion of the first time interval, display, on the display panel (140), each of the first images; and
based on storing in the memory (130) each of second images received through the interface in accordance with the second image transmission executed in a portion of the second time interval, display, on the display panel (140), each of the second images.

6. The electronic device (100) of claim 1, wherein the processor (110) is configured to:
in at least another portion of the first time interval being from a timing changing the second maximum refresh rate to the first maximum refresh rate, execute, through the interface, a third image transmission from the processor (110) to the display driver circuitry (120) according to changing the second maximum refresh rate to the first maximum refresh rate;
in the at least another portion of the first time interval, execute, through the interface, a fourth image transmission from the processor (110) to the display driver circuitry (120) at a timing identified from a start timing of the third image transmission based on the shortest length; and
in the at least portion of the first time interval subsequent to the at least another portion of the first time interval, execute an image transmission from the processor (110) to the display driver circuitry (120) through the interface based on the length.

7. The electronic device (100) of claim 6, wherein the processor (110) is configured to:
in the at least another portion of the first time interval, execute the third image transmission by transmitting a first image through the interface to the display driver circuitry (120);
before an end timing of the time interval, having the shortest length, being from the start timing of the third image transmission, refrain from executing the fourth image transmission by transmitting a second image subsequent to the first image through the interface to the display driver circuitry (120); and
in the at least portion of the first time interval, execute the image transmission through the interface based on the length.

8. The electronic device (100) of claim 7, wherein the display driver circuitry (120) is further configured to:
display the first image on the display panel (140) and store the first image in the memory (130); and
before an end timing of the time interval, having the shortest length, being from the start timing of the third image transmission, display again the first image on the display panel (140) by scanning the first image stored in the memory (130).

9. The electronic device (100) of claim 8, wherein the display driver circuitry (120) is configured to:
based on a refresh rate of an image that was displayed before the timing, execute displaying again the first image by storing the first image in the memory (130) and scanning the first image in the memory (130).

10. The electronic device (100) of claim 8, wherein the display driver circuitry (120) is configured to:
based on identifying that an image is maintained, on the display panel (140), in the second time interval being before the timing, during a time longer than a reference time, execute displaying again the first image by storing the first image in the memory (130) and scanning the first image in the memory (130).

11. The electronic device (100) of claim 10, wherein the display driver circuitry (120) is configured to:
further based on the first image different from the image, execute displaying again the first image by storing the first image in the memory (130) and scanning the first image in the memory (130).

12. The electronic device (100) of claim 8, wherein the display driver circuitry (120) is configured to:
before the timing, obtain, from the processor (110), a control command indicating to execute a display on the display panel (140) by bypassing the memory (130); and
after the control command is obtained, execute displaying again the first image by storing the first image in the memory (130) and scanning the first image in the memory (130).

13. A method executed in an electronic device (100) comprising a processor (110), a display (115) including display driver circuitry (120) including memory (130) and a display panel (140), and an interface connecting the display driver circuitry (120) to the processor (110), the method comprising:
executing, by the processor (110), through the interface, a first image transmission from the processor (110) to the display driver circuitry (120);
in at least a portion of a first time interval providing a first maximum refresh rate higher than a reference refresh rate, executing, by the processor (110), through the interface, a second image transmission from the processor (110) to the display driver circuitry (120) at first timings identified from a start timing of the first image transmission based on a length of an emission period for a display on the display panel (140); and
in a second time interval providing a second maximum refresh rate lower than or equal to the reference refresh rate, executing, by the processor (110), through the interface, the second image transmission at second timings identified from the start timing based on a shortest length of a time interval capable of executing the display on the display panel (140) through the display driver circuitry (120),
wherein at least a portion of displays on the display panel (140) in the second time interval from among the at least a portion of the first time interval and the second time interval is executed using the memory (130), and
wherein the length is shorter than the shortest length.

14. The method of claim 13, wherein timings of an emission synchronization signal in the second time interval indicating the emission period include:
third timings respectively overlapping the second timings, and
fourth timings between the third timings.

15. The method of claim 14, further comprising:
in the second time interval, refraining from, by the processor (110), executing an image transmission from the processor (110) to the display driver circuitry (120) through the interface based on the fourth timings from among the third timings and the fourth timings.
